(19) Europäisches Patentamt
European Patent Office
Office européen des brevets

(11) Veröffentlichungsnummer : **0 385 377 B1**

(12) # EUROPÄISCHE PATENTSCHRIFT

(45) Veröffentlichungstag der Patentschrift : **20.01.93 Patentblatt 93/03**

(51) Int. Cl.$^5$ : **C08F 20/34,** G03G 5/07, G03G 13/28, G03G 5/05

(21) Anmeldenummer : **90103756.4**

(22) Anmeldetag : **26.02.90**

(54) **Seitenständige Carbazolyl-Gruppen enthaltende Methacrylat-(Co)Polymerisate und elektrophotographische Aufzeichnungselemente, enthaltend dieselben.**

(30) Priorität : **28.02.89 DE 3906245**

(43) Veröffentlichungstag der Anmeldung : **05.09.90 Patentblatt 90/36**

(45) Bekanntmachung des Hinweises auf die Patenterteilung : **20.01.93 Patentblatt 93/03**

(84) Benannte Vertragsstaaten : **BE CH DE ES FR GB IT LI NL SE**

(56) Entgegenhaltungen :
**EP-A- 0 131 215**
**MAKROMOLEKULARE CHEMIE, Band 190, Nr. 7, Juli 1989, Seiten 1537-1545, American Chemical Society; C.I. SIMONESCU et al.:"Polymers with carbazolylalkyl groups and their charge transfer complexes with 2,5-cyclohexadien-1,4-diylidenedimalononitrile(TCNQ)"**

(56) Entgegenhaltungen :
**MACROMOLECULES, Band 18, Nr. 5, Mai 1985, Seiten 1043-1045, American Chemical Society, Washington, D.C., US; R. OSHIMA etal.: "Improved hole mobility of polyacrylate having a carbazole chromophore"**

(73) Patentinhaber : **BASF Aktiengesellschaft**
**Carl-Bosch-Strasse 38**
**W-6700 Ludwigshafen (DE)**

(72) Erfinder : **Leyrer, Reinhold J., Dr.**
**Menzelstrasse 4**
**W-6700 Ludwigshafen (DE)**
Erfinder : **Lauke, Harald, Dr.**
**Sophienstrasse 10**
**W-6800 Mannheim 1 (DE)**
Erfinder : **Nick, Bernhard, Dr.**
**Sinsheimer Strasse 20**
**W-6700 Ludwigshafen (DE)**
Erfinder : **Strohriegl, Peter, Dr.**
**Bayreuther Strasse 15 a**
**W-8581 Hummeltal (DE)**
Erfinder : **Haarer, Dietrich, Prof. Dr.**
**Hangweg 30**
**W-8580 Bayreuth (DE)**

EP 0 385 377 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue, seitenständige Carbazolyl-Gruppen enthaltende Methacrylat-(Co)Polymerisate sowie deren Verwendung zur Herstellung von festen, photoleitfähigen Schichten. Die Erfindung betrifft des weiteren insbesondere elektrophotographische Aufzeichnungselemente mit einem elektrisch leitenden Träger sowie einer festen, photoleitfähigen Schicht aus den neuen, seitenständige Carbazolyl-Gruppen enthaltenden Methacrylat-(Co)Polymerisaten. Außerdem betrifft die Erfindung elektrophotographische Offset-Druckplatten, welche Methacrylat-(Co)Polymerisate als Photoleiter enthalten.

Feste, photoleitfähige Schichten mit einer photoleitfähigen organischen Verbindung sind für elektrophotographische Aufzeichnungsmaterialien, wie Kopierfilme oder elektrophotographische Offset-Druckplatten, zunehmend von Interesse. Als organische Photoleiter, die in den festen, photoleitfähigen Schichten in der Regel zusammen mit Sensibilisatoren eingesetzt werden, sind polymere Materialien bevorzugt. Die Sensibilisatoren können sowohl der Verbesserung der spektralen Empfindlichkeit als auch der Erzeugung von Ladungsträgern des elektrischen Stromes unter der Einwirkung von aktinischem Licht dienen.

Unter den bekannten polymeren photoleitfähigen Verbindungen kommt Poly-N-Vinylcarbazol wegen seiner guten Eigenschaften als Photoleiter besondere Bedeutung zu. In den photoleitfähigen Schichten wird Poly-N-Vinylcarbazol dabei in aller Regel zusammen mit einer Lewis-Säure, insbesondere 2,4,7-Trinitro-9-fluorenon, oder anderen sensibilisierenden organischen Farbstoffen oder Pigmenten, die die spektrale Empfindlichkeit des Poly-N-vinylcarbazols erhöhen und/oder als Ladungsträger des elektrischen Stromes erzeugende Verbindungen fungieren, eingesetzt. Zum Stand der Technik sei diesbezüglich beispielsweise auf die EP-A-61 088, EP-A-61 089, EP-A-61 092, EP-A-131 215 sowie DE-A-32 08 337 verwiesen.

Ein großer Nachteil des Poly-N-vinylcarbazols ist seine große Sprödigkeit. Feste, photoleitfähige Schichten aus Poly-N-vinylcarbazol sind hart, nicht biegsam und sehr anfällig gegenüber Rißbildung. Ferner zeigen sie nur eine schlechte Haftung gegenüber Metallen, wie sie in elektrophotographischen Aufzeichnungsmaterialien üblicherweise als elektrisch leitende Träger für die photoleitfähigen Schichten eingesetzt werden. Zur Umgehung dieser Nachteile werden den photoleitfähigen Schichten auf Basis von Poly-N-vinylcarbazol vielfach Weichmacher zugegeben und werden diese Schichten in aller Regel mittels eines Primers auf die metallischen Träger aufgebracht. Beides beeinträchtigt in nicht unerheblichem Maße die photoleitfähigen Eigenschaften dieser Schichten bzw. der hiermit hergestellten elektrophotographischen Aufzeichnungsmaterialien.

Zur Überwindung der bekannten Nachteile des Poly-N-vinylcarbazols werden in der EP-A-224 784 Polysiloxane mit seitenständig zur Polymerhauptkette gebundenen Carbazolgruppen als organische polymere Photoleiter vorgeschlagen. Diese Carbazol-substituierten Polysiloxane zeigen mit Poly-N-vinylcarbazol vergleichbare Photoleiter-Eigenschaften, lassen sich im Vergleich zu Poly-N-vinylcarbazol jedoch zu flexiblen, beständigen photoleitfähigen Schichten mit guter Haftung gegenüber metallischen Trägermaterialien verarbeiten. Ein Nachteil der Carbazol-substituierten Polysiloxane für die Anwendung in elektrophotographischen Offset-Druckplatten liegt jedoch darin, daß es praktisch nicht möglich ist, stabile, alkalilösliche Derivate hiervon herzustellen. Darüber hinaus ist der Brauchbarkeitsbereich der Carbazol-substituierten Polysiloxane bei der Anwendung in elektrophotographischen Aufzeichnungsmaterialien aufgrund ihrer relativ hohen Neigung zur Klebrigkeit bedauerlicherweise eingeschränkt.

In der US-A-3 316 087 sind photoleitende Schichten für die Elektrophotographie beschrieben, die aus einem Polymeren von einem aromatischen und/oder heterocyclischen (Meth)acrylsäureester aufgebaut sind. U.a. ist dabei auch z.B. das Poly(N-carbazolylmethyl-acrylat) als Photoleiter genannt. Darüber hinaus sind auch bereits die Photoleitereigenschaften von Poly(2-N-carbazolylethyl-methacrylat) und Poly(2-N-carbazolylethyl-acrylat) untersucht worden. So wird beispielsweise in Journ. of Polym. Sci., Polym. Letters Ed., Vol. 23, Seiten 151 bis 154 (1985) sowie in Macromolecules, Bd. 18, Seiten 1043 bis 1045 (1985) gezeigt, daß die Lochtransporteigenschaften von radikalisch polymerisiertem Poly(2-N-carbazolylethyl-methacrylat) trotz des niedrigeren Gehalts an Carbazol-Chromophoren mit denen von Poly-N-vinylcarbazol vergleichbar sind, während die Lochtransporteigenschaften von radikalisch polymerisiertem Poly(2-N-carbazolylethyl-acrylat) sogar um eine Größenordnung höher liegen. Nach Macromolecules, Bd. 20, Seiten 712 bis 716 (1987) sind die Lochtransporteigenschaften von anionisch polymerisiertem, isotaktischem Poly(2-N-carbazolylethyl-acrylat) nochmals höher als die des entsprechenden radikalisch polymerisierten ataktischen Polyacrylats. Diese bekannten Carbazolyl-Seitengruppen tragenden Poly(meth)acrylate besitzen jedoch für die praktische Anwendung eine zu große Sprödigkeit und schlechte Hafteigenschaften gegenüber metallischen Trägermaterialien, wie sie üblicherweise in elektrophotographischen Aufzeichnungselementen verwendet werden.

Photoleitfähige Schichten aus diesen bekannten Carbazolyl-Seitengruppen tragenden Poly(meth)acrylaten brechen beispielsweise beim Aufspannen entsprechender elektrophotographischer Aufzeichnungselemente mit flexiblen Trägern auf Druckzylinder oder Walzen von dem flexiblen Träger ab, so daß diese photoleitfähigen Schichten, wenn überhaupt, allenfalls unter Verwendung von Haftvermittlern für flexible

elektrophotographische Aufzeichnungselemente einsetzbar sind. Die Verwendung von Haftvermittlern beeinträchtigt aber wiederum die anwendungstechnischen Eigenschaften dieser elektrophotographischen Aufzeichnungselemente.

Außerdem werden in der Publikation von Chau-Jin Hu et al., "Synthesis and Photoinduced Discharge of Polyacrylates with Pendant Carbazol Group", in Journal of Polymer Science, Part C: Polymer Letters, Volume 26, Seiten 441 bis 446, 1988, Polyacrylate beschrieben, welche aus wiederkehrenden Einheiten der allgemeinen Formel (Ia) bestehen,

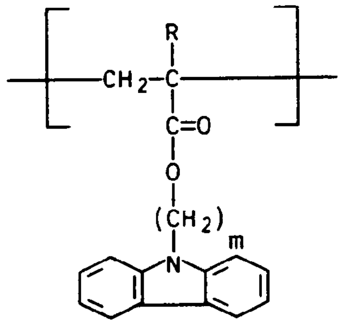

(Ia)

worin R für ein Wasserstoffatom und m für 2, 3, 4, 5, 6 oder 8 stehen. Darüber hinaus gehen aus dieser Publikation elektrophotographische Aufzeichnungselemente hervor, welche diese Polyacrylate (Ia) als Photoleiter enthalten. Dagegen werden weder elektrophotographische Offset-Druckplatten noch Methacrylat-(Co)Polymerisate in dieser Publikation beschrieben.

Aufgabe der vorliegenden Erfindung war es, neue polymere Verbindungen mit guten Photoleitereigenschaften zu entwickeln, mit denen flexible, nichtklebrige photoleitende Schichten mit guter Haftung gegenüber metallischen Trägermaterialien hergestellt werden können und deren Alkalilöslichkeit im gewünschten Maße variiert und eingestellt werden kann. Aufgabe der Erfindung war es ferner, zum Aufspannen auf Trommeln oder Zylindern geeignete elektrophotographische Aufzeichnungselemente mit einem flexiblen Träger mit metallischer Oberfläche aufzuzeigen, deren photoleitfähige Schicht gute Flexibilität aufweist, nicht klebrig ist und gute Haftungseigenschaften gegenüber der Oberfläche des Trägermaterials besitzt. überraschenderweise wurde gefunden, daß diese Aufgaben durch neue, seitenständige Carbazolyl-Gruppen enthaltende Methacrylat-(Co)Polymerisate der nachstehend näher gekennzeichneten Art bzw. durch elektrophotographische Aufzeichnungselemente mit einer photoleitfähigen Schicht auf Basis dieser neuen, seitenständige Carbazolyl-Gruppen enthaltenden Methacrylat-(Co)Polymerisate gelöst werden können.

Gegenstand der Erfindung sind dementsprechend seitenständige Carbazolyl-Gruppen enthaltende Methacrylat-(Co)Polymerisate, die wiederkehrende Einheiten der allgemeinen Formel (I)

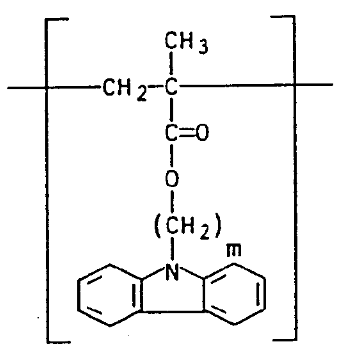

(I)

eingebaut enthalten oder hieraus bestehen, worin m für eine ganze Zahl im Bereich von 3 bis 11 steht.

Gegenstand der Erfindung ist weiterhin ein zum Aufspannen auf Trommeln oder Zylindern geeignetes elektrophotographisches Aufzeichnungselement mit einem flexiblen Träger mit einer elektrisch leitenden Oberfläche und einer hierauf aufgebrachten festen, photoleitfähigen Schicht, welches dadurch gekennzeichnet ist, daß die photoleitfähige Schicht als photoleitende Verbindung ein seitenständige Carbazolyl-Gruppen enthaltendes Methacrylat-Co ()Polymerisat mit wiederkehrenden Einheiten der vorstehend angegebenen allgemeinen Formel (I) enthält.

Ein weiterer Gegenstand der vorliegenden Erfindung ist eine wäßrig-alkalisch entwickelbare elektrophotographische Offset-Druckplatte mit einem flexiblen elektrischen Träger und einer hierauf aufgebrachten festen photoleitfähigen Schicht, die als Photoleiter mindestens ein Methacrylat-(Co)Polymerisat aufweist, welches wiederkehrende Einheiten der allgemeinen Formel (I),

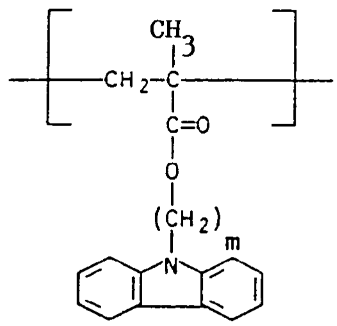

(I)

worin m für ein ganze Zahl von 3 bis 11 steht, enthält oder welches hieraus besteht.

Die neuen erfindungsgemäßen Carbazolyl-Seitengruppen enthaltenden Methacrylat-(Co)Polymerisate besitzen eine gute Photoleitfähigkeit und lassen sich in vorteilhafter Weise zu flexiblen, nicht-klebrigen photoleitfähigen Schichten mit guter Haftung auf Substraten mit metallischen Oberflächen verarbeiten. Darüber hinaus können auch stabile, alkalilösliche Produkte in einfacher Weise erhalten werden. Die neuen erfindungsgemäßen Carbazolyl-Seitengruppen tragenden Methacrylat-(Co)Polymerisate eignen sich daher besonders vorteilhaft für die Herstellung von elektrophotographischen Aufzeichnungselementen mit flexiblen Trägern, die bei ihrer Anwendung einer hohen Biegebeanspruchung, wie sie beispielsweise beim Aufspannen der Aufzeichnungselemente auf Trommeln oder Zylinder auftritt, standhalten müssen. Die erfindungsgemäßen elektrophotographischen Aufzeichnungselemente sind daher sehr gut geeignet für den Einsatz in der Kopiertechnik in Form von elektrophotographischen Kopierfolien als auch für die Herstellung von elektrophotographischen Druckformen, wie sie insbesondere im Offsetdruck Anwendung finden.

Die neuen erfindungsgemäßen photoleitenden Methacrylat-(Co)Polymerisate enthalten als ihren wesentlichen Bestandteil wiederkehrende Einheiten der allgemeinen Formel (I)

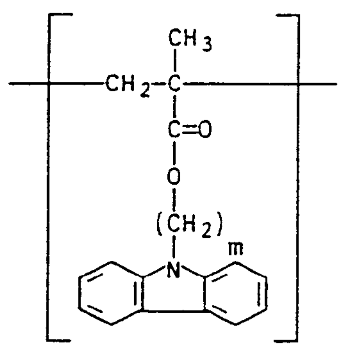

(I)

eingebaut. Bei den wiederkehrenden Einheiten der allgemeinen Formel (I) handelt es sich dementsprechend um einpolymerisierte Methacrylat-Struktureinheiten, bei denen der Alkoholrest der Estergruppierung aus einem über eine Alkylen-Gruppe mit dem Sauerstoffatom der Ester-Funktion verbundenen N-Carbazolyl-Rest gebildet wird. Die Zahl m in der allgemeinen Formel (I) für die Anzahl der Methylen-Gruppen im Alkylenrest, der die N-Carbazolyl-Gruppe mit dem Sauerstoffatom der Ester-Funktion verbindet, liegt für die erfindungsgemäßen neuen Methacrylat-(Co)Polymerisate im Bereich von 3 bis 11, vorteilhafterweise 4 bis 11 und im allgemeinen insbesondere im Bereich von 4 bis 7. Der Carbazolylrest in den wiederkehrenden Einheiten der allgemeinen Formel (I) kann beispielsweise durch eine oder mehrere Alkylgruppen, Alkoxygruppen, Aminogruppen, Hydroxygruppen oder Halogenatome substituiert sein, insbesondere ist er jedoch unsubstituiert.

Die neuen, erfindungsgemäßen Carbazolyl-Seitengruppen enthaltenden Methacrylat-(Co)Polymerisate können dabei wiederkehrenden Methacrylat-Einheiten der allgemeinen Formel (I) eingebaut enthalten oder hieraus bestehen. Darüber hinaus ist es auch möglich, daß die erfindungsgemäßen Methacrylat-(Co)Polymerisate mit den seitenständigen Carbazolyl-Guppen neben den wiederkehrenden Einheiten der allgemeinen Formel (I) auch noch weitere wiederkehrende Einheiten von einpolymerisierten Monomeren eingebaut enthalten. Bei solchen anderen einpolymerisierten Comonomeren kann es sich beispielsweise um Alkylacrylate oder Alkylmethacrylate, insbesondere mit 1 bis 8 Kohlenstoffatomen im Alkylrest, handeln. Enthalten die erfindungsgemäßen Methacrylate-(Co)Polymerisate neben den wiederkehrenden Einheiten der allgemeinen Formel (I) als Co-Bausteine beispielsweise Acrylsäure- oder Methacrylsäure-Einheiten einpolymerisiert, ergeben sich seitenständige Carbazolyl-Gruppen enthaltende Methacrylate-(Co)Polymerisate mit einer erhöhten Löslichkeit in alkalischen Medien. Solche erfindungsgemäßen Methacrylat-(Co)Polymerisate, die neben den wiederkehrenden Einheiten der allgemeinen Formel (I) auch noch Acrylsäure- und/oder Methacrylsäure-Einheiten einpolymerisiert enthalten, sind daher mit besonderem Vorteil für die Herstellung von photoleitfähigen Schichten von elektrophotographischen Druckplatten geeignet, da diese in aller Regel nach der bildmäßigen Belichtung mit alkalischen Entwicklerlösungsmitteln ausgewaschen werden. Die neuen, erfindungsgemäßen seitenständige Carbazolyl-Gruppen enthaltenden Methacrylat-(Co)Polymerisate sollten zur Erzielung einer guten und hinreichenden Photoleitfähigkeit im allgemeinen zu mindestens 60 % aus wiederkehrenden Einheiten der allgemeinen Formel (I) bestehen. Im Hinblick auf ihre Verwendung in den elektrophotographischen Aufzeichnungselementen sind dabei die erfindungsgemäßen Methacrylat-(Co)Polymerisate bevorzugt, die zu 80 bis 100 % aus wiederkehrenden Einheiten der allgemeinen Formel (I) aufgebaut sind. Die neuen, erfindungsgemäßen seitenständige Carbazolyl-Gruppen enthaltenden Methacrylat-(Co)Polymerisate sind bei Raumtemperatur fest; ihr Molekulargewicht liegt in dem für Polymethacrylate üblichen Molekulargewichtsbereich. Vorzugsweise weisen die neuen, erfindungsgemäßen seitenständige Carbazolyl-Gruppen enthaltenden Methacrylat-(Co)Polymerisate ein mittleres Molekulargewicht (Gewichtsmittel) im Bereich von 20.000 bis 300.000, insbesondere im Bereich von 50.000 bis 200.000, auf.

Die erfindungsgemäßen, seitenständige Carbazolyl-Gruppen enthaltenden Methacrylat-(Co)Polymerisate können in an sich bekannter Weise durch Polymerisation oder Copolymerisation der diesen Polymeren zugrundeliegenden Monomeren hergestellt werden. Die Polymerisation kann dabei z.B. radikalisch in Lösung mittels der üblichen Radikalstarter, wie z.B. Azobisisobutyronitril, durchgeführt werden. Die den wiederkehrenden Einheiten der allgemeinen Formel (I) zugrundeliegenden monomeren N-Carbazolylalkylmethacrylate lassen sich nach bekannten Methoden der organischen Chemie beispielsweise nach folgendem Reaktionsschema herstellen:

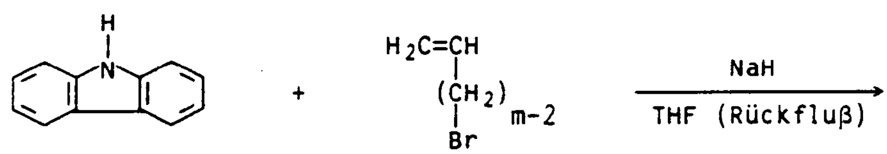


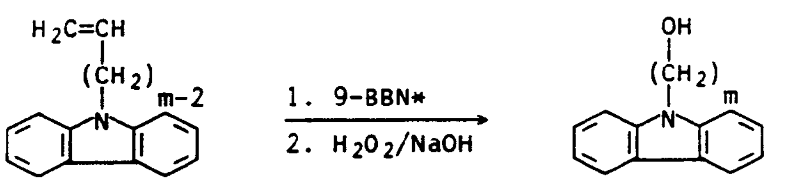


(II)

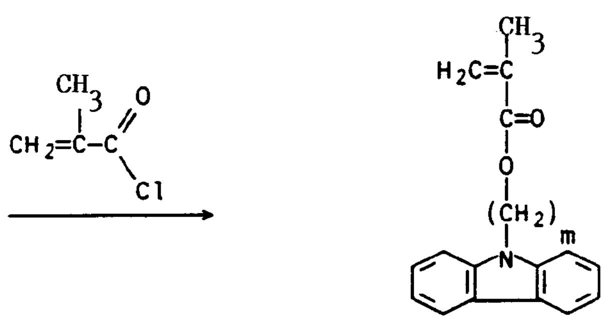

(III)

* 9-BBN: Borabicyclo[3.3.1]nonan

Bei dem in dem Reaktionsschema skizzierten Syntheseweg zur Herstellung der monomeren N-Carbazolylalkylmethacrylate der allgemeinen Formel (III) geht man von Carbazol aus, welches man mit den entsprechenden Alkenylhalogeniden nach den Synthesevorschriften von J. Heller, D.J. Lyman und W.A. Hewett, Makromol. Chem., Band 73, 48 (1964) zu den N-Alkenylcarbazolen umsetzt. Aus diesen N-Alkenylcarbazolen erhält man die N-Carbazolylalkanole der allgemeinen Formel (II) durch Hydroborierung mit 9-Borabicyclo[3.3.1]nonan (9-BBN). Die Hydroborierungsreaktion kann analog der Vorschrift von H.C. Brown, E.F. Knights und G.G. Scouten, Journ. of Am. Chem. Soc., Vol. 96, 7765 (1974) durchgeführt werden. Aus den Alkoholen der Formel (II) lassen sich durch einfache Umsetzung mit Methacrylsäurechlorid unter üblichen Bedingungen die monomeren, seitenständige Carbazolyl-Gruppen tragenden Methacrylate der allgemeinen Formel (III) herstellen. Die Herstellung der monomeren, Carbazolyl-Gruppen tragenden Methacrylate sowie der erfindungsgemäßen seitenständige Carbazolyl-Gruppen enthaltenden Methacrylat-(Co)Polymerisate wird des weiteren durch die nachfolgenden Beispiele näher erläutert.

Die erfindungsgemäßen, seitenständige Carbazolyl-Gruppen enthaltenden Methacrylat-(Co)Polymerisate lassen sich überall dort als Photoleiter einsetzen, wo bisher Poly-N-vinylcarbazol oder andere, photoleitende, Carbazolyl-Gruppen enthaltende Polymere als Photoleiter verwendet worden sind. Gegenüber den bekannten Materialien zeigen die erfindungsgemäßen, seitenständige Carbazolyl-Gruppen enthaltenden Methacrylat-(Co)Polymerisate hinsichtlich ihres Einsatzes in photoleitfähigen Schichten deutliche und überraschende Vorteile. So sind die aus den erfindungsgemäßen, seitenständige Carbazolyl-Gruppen enthaltenden Methacrylat-(Co)Polymerisaten hergestellten photoleitfähigen Schichten nicht nur flexibel und nicht spröde, sondern bei gleichzeitig guten Haftungseigenschaften gegenüber metallischen Oberflächen auch nicht klebrig. Die erfindungsgemäß hergestellten photoleitfähigen Schichten sind daher breit anwendbar. Ebenso wie im Fall von Poly-N-vinylcarbazol ist es möglich und im allgemeinen vorteilhaft, die erfindungsgemäßen, seitenständige Carbazolyl-Gruppen tragenden Methacrylat-(Co)Polymerisate bei ihrem Einsatz als Photoleiter in photoleitfähigen Schichten zusammen mit Dotierungs- und/ oder Sensibilisierungsmitteln einzusetzen. Hierfür kommen die für Poly-N-vinylcarbazol üblichen und an sich bekannten Dotierungs- und Sensibilisierungsmittel in Betracht, wie z.B. Elektronenakzeptor-Materialien, die mit den Carbazolyl-Gruppen einen Ladungsübertragungskomplex zu bilden vermögen. Stellvertretend und beispielhaft hierfür seien Lewis-Säuren, wie 2, 4, 7-Trinitrofluorenon, 2, 4, 5, 7-Tetranitrofluorenon, Chloranil oder Tetracyanochinondimethan, genannt.

Photoleitfähige Schichten aus den erfindungsgemäßen, seitenständige Carbazolyl-Gruppen enthaltenden Methacrylat-(Co)Polymerisaten lassen sich nach den an sich bekannten Methoden, z.B. durch Gießen aus Lösung und Abdampfen des Lösungsmittels herstellen. Hierbei können die als Photoleiter fungierenden erfindungsgemäßen, seitenständige Carbazolyl-Gruppen enthaltenden Methacrylat-(Co)Polymerisate auch zusammen mit anderen Photoleitern und/oder festen, polymeren Bindemitteln verwendet werden. Es hat sich jedoch als günstig erwiesen, die photoleitfähigen Schichten nur aus den erfindungsgemäßen, seitenständige Carbazolyl-Gruppen enthaltenden Methacrylat-(Co)Polymerisaten gewünschtenfalls zusammen mit den erwähnten Dotierungs- und /oder Sensibilisierungsmitteln hierfür, zu bilden.

Als Sensibilisierungsmittel, die den photoleitfähigen Schichten aus den erfindungsgemäßen seitenständige Carbazolyl-Gruppen enthaltenden Methacrylat-(Co)Polymerisaten zur Steigerung der Photoempfindlichkeit und/oder Photoleitfähigkeit zugesetzt werden können, kommen prinzipiell alle organischen Farbstoffe oder organischen Pigmente in Betracht, die für die Sensibilisierung von photoleitfähigen Schichten aus Poly-N-vinylcarbazol oder anderen photoleitfähigen, Carbazolyl-Gruppen enthaltenden Verbindungen an sich bekannt und üblich sind. Hierzu gehören sowohl spektrale Sensibilisierungsfarbstoffe, d.h. organische Farbstoffe, die die spektrale Empfindlichkeit der photoleitfähigen Schicht verbessern, als auch Farbstoffe und Pigmente, die unter dem Einfluß von aktinischem Licht Ladungsträger des elektrischen Stromes zu erzeugen und diese unter Mithilfe eines von außen auf die photoleitfähige Schicht aufgeprägten elektrischen Feldes auf die photoleitfähige Verbindung zu übertragen vermögen. Je nach Art des verwendeten Sensibilisierungsmittels und Einsatzgebiets der photoleitfähigen Schicht bzw. des elektrophotographischen Aufzeichnungselements kann dabei die Sensibilisierung homogen oder heterogen erfolgen. Bei homogen sensibilisierten photoleitfähigen Schichten liegen die Sensibilisierungsmittel zusammen mit den erfindungsgemäß als Photoleiter verwendeten, seitenständige Carbazolyl-Gruppen enthaltenden Methacrylat-(Co)Polymerisaten in homogener Mischung miteinander vor. Für diese einlagigen, homogen sensibilisierten photoleitfähigen Schichten kommen in üblicher und an sich bekannter Weise insbesondere die löslichen organischen Farbstoffe als Sensibilisierungsmittel in Betracht. Organische Pigmente werden hingegen vorzugsweise für mehrlagige, heterogen sensibilisierte photoleitfähige Schichten verwendet, bei denen das Sensibilisierungsmittel und die erfindungsgemäß als Photoleiter verwendeten, seitenständige Carbazolyl-Gruppen enthaltenden Methacrylat-(Co)Polymerisate in separaten, diskreten, übereinanderliegenden Lagen in Art einer sogenannten Komposit-Struktur enthalten sind. Bei den mehrlagigen, heterogen sensibilisierten photoleitfähigen Schichten enthält die erste Lage im allgemeinen das Sensibilisierungsmittel und die darüber angeordnete zweite Lage die photoleitende Verbindung. Als Sensibilisierungsmittel kommen in diesem Fall neben organischen Pigmenten auch anorganische Materialien, wie beispielsweise Selen oder andere unter der Einwirkung von aktinischem Licht Ladungsträger des elektrischen Stromes erzeugende Verbindungen, in Betracht. Einlagige, homogen sensibilisierte photoleitfähige Schichten enthalten das Sensibilisierungsmittel im allgemeinen in einer Menge von etwa 0,5 bis 10 Gew.-%, bezogen auf die in der photoleitfähigen Schicht enthaltene photoleitfähige Verbindung.

Zu den organischen Farbstoffen, die für die erfindungsgemäßen einlagigen, homogen sensibilisierten photoleitfähigen Schichten als Sensibilisierungsmittel in Betracht kommen, gehören insbesondere die Triarylmethan-Farbstoffe, Xanthen-Farbstoffe, Cyanin-Farbstoffe, Thiazin-Farbstoffe und andere. Zu den als Sensibilisierungsmittel geeigneten Farbstoffen oder Pigmenten für die mehrlagig aufgebauten, heterogen sensibilisierten erfindungsgemäßen photoleitfähigen Schichten gehören unter anderem Azofarbstoffe, Phthalocyanine und Isoindolinfarbstoffe. Als besonders günstig und vorteilhaft für die Sensibilisierung sowohl der einlagigen, homogen sensibilisierten als auch der mehrlagigen, heterogen sensibilisierten erfindungsgemäßen photoleitfähigen Schichten haben sich Farbstoffe oder Pigmente aus der Reihe der Perylen-3,4:9,10-tetracarbonsäurederivate erwiesen.

Die Herstellung der erfindungsgemäßen photoleitfähigen Schichten bzw. der solche photoleitfähigen Schichten enthaltenden elektrophotographischen Aufzeichnungselemente kann, wie gesagt, nach den an sich üblichen Methoden und Verfahrenstechniken erfolgen, wie sie als solche bekannt und in der einschlägigen Literatur hinreichend beschrieben sind. Einlagige erfindungsgemäße photoleitfähige Schichten haben dabei im allgemeinen eine Trockenschichtdicke im Bereich von ca. 0,8 bis 40 μm, wobei die Schichtdicke vom Verwendungszweck abhängt. So beträgt die Schichtdicke von einlagigen photoleitfähigen Schichten bei elektrophotographischen Druckformen insbesondere 0,8 bis 6 μm und bei Kopierfilmen etwa 5 bis 25 μm. Bei den mehrlagigen, heterogen sensibilisierten erfindungsgemäßen photoleitfähigen Schichten beträgt die Trockenschichtdicke der ersten Lage aus dem Sensibilisierungsmittel im allgemeinen 0,005 bis 5 μm, insbesondere 0,1 bis 1,5 μm und die der zweiten Lage aus dem Photoleiter im allgemeinen etwa 1 bis 40 μm, vorzugsweise 5 bis 25 μm und insbesondere 7 bis 15 μm. Vorzugsweise wird bei den mehrlagigen, heterogen sensibilisierten erfindungsgemäßen photoleitfähigen Schichten die zweite Lage allein aus den erfindungsgemäßen seitenständige Carbazolyl-Gruppen enthaltenden Methacrylat-(Co)Polymerisaten als Photoleiter hergestellt.

Ein besonderer Vorteil der erfindungsgemäßen seitenständige Carbazolyl-Gruppen enthaltenden Methacrylat-(Co)Polymerisate besteht darin, daß hieraus hergestellte feste, photoleitfähige Schichten in elektrophotographischen Aufzeichnungselementen ohne Mitverwendung einer gesonderten Haftschicht auf flexible, elektrisch leitende Trägermaterialien aufgebracht werden können, ohne daß die photoleitfähige Schicht unter einer hohen Biegebeanspruchung, wie sie beispielsweise beim Aufspannen der elektrophotographischen Aufzeichnungselemente auf Trommeln oder Zylinder gegeben ist, bricht oder abblättert. Dennoch sind die erfindungsgemäßen photoleitfähigen Schichten bei Raumtemperatur nicht klebrig, so daß sie ohne besondere Maßnahmen allgemein und breit verwendet werden können. Aufgrund ihrer Eigenschaften eignen sich die mit den erfindungsgemäßen seitenständige Carbazolyl-Gruppen enthaltenden Methacrylat-(Co)Polymerisate hergestellten photoleitfähigen Schichten somit insbesondere zur Herstellung von elektrophotographischen Aufzeichnungselementen, die zum Aufspannen auf Trommeln oder Zylinder geeignet sind, wie z.B. Kopierfolien, das sind elektrophotographische Folien für den Kopiersektor, oder elektrophotographische Druckplatten, insbesondere elektrophotographische Offsetdruckplatten. Für den letztgenannten Anwendungszweck besonders günstig ist ferner die Tatsache, daß die Alkalilöslichkeit der erfindungsgemäßen seitenständige Carbazolyl-Gruppen enthaltenden Methacrylat-(Co)Polymerisate oder auch der bekannten (Meth)Acrylat-(Co)Polymerisate durch den Einbau von Säuregruppen, insbesondere COOH-Gruppen, enthaltenden Co-Bausteinen in die Polymerkette variiert und gezielt in dem gewünschten Bereich eingestellt werden kann.

In den elektrophotographischen Aufzeichnungselementen sind die erfindungsgemäßen festen, photoleitfähigen Schichten auf einen elektrisch leitenden Träger aufgebracht. Als elektrisch leitende Träger für die elektrophotographischen Aufzeichnungselemente sind prinzipiell alle elektrisch leitfähigen Trägermaterialien verwendbar, wie sie für elektrophotographische Aufzeichnungsmaterialien an sich bekannt und üblich sind. Besonders geeignet sind die erfindungsgemäßen festen, photoleitfähigen Schichten dabei für elektrophotographische Aufzeichnungselemente mit flexiblen, biegsamen Trägern. Bevorzugt sind je nach Einsatzgebiet der erfindungsgemäßen elektrophotographischen Aufzeichnungselemente als elektrisch leitende Träger Aluminium-, Zink-, Magnesium-, Kupfer- oder Mehrmetallplatten, z.B. rohe oder vorbehandelte, z.B. aufgerauhte und/oder anodisierte Aluminiumbleche, Aluminiumfolien, Nickelbleche oder mit Aluminium, Zinn, Blei, Wismuth oder ähnlichen Metallen bedampfte Kunststoff-Folien, vorzugsweise Polyesterfolien, z.B. aus Polyethylenterephthalat oder Polybutylenterephthalat. Als Träger für die erfindungsgemäßen elektrophotographischen Aufzeichnungselemente kommen auch elektrisch leitende Spezialpapiere in Betracht. Neben den flachen, ebenen Trägern können darüber hinaus auch zylinderförmige Träger, beispielsweise Metallzylinder oder Zylinder mit metallischer Oberfläche, eingesetzt werden. Die erfindungsgemäßen photoleitfähigen Schichten werden für die Herstellung der elektrophotographischen Aufzeichnungselemente in an sich bekannter und üblicher Weise

auf den elektrisch leitenden Träger aufgebracht. Vorzugsweise geschieht dies gleichzeitig mit der Herstellung der erfindungsgemäßen festen photoleitfähigen Schicht, beispielsweise dadurch, daß die erfindungsgemäße feste, photoleitfähige Schicht aus Lösung auf dem elektrisch leitenden Träger erzeugt und hergestellt wird.

Die erfindungsgemäßen elektrophotographischen Aufzeichnungselemente können dabei wie für solche Aufzeichnungselemente an für sich bekannt und üblich zwischen dem elektrisch leitenden Träger und der festen photoleitfähigen Schicht bzw. bei Aufzeichnungselemten mit einer mehrlagigen photoleitfähigen Schicht auch zwischen den einzelnen Lagen der photoleitfähigen Schicht Sperrschichten, beispielsweise aus Metalloxiden, wie Aluminiumoxid, Polymeren, wie z.B. Polyamid, Polyvinylalkohol, Polystyrol oder ähnlichen Systemen, enthalten.

Die Erfindung wird durch die nachfolgenden Beispiele näher erläutert. Die in den Beispielen genannten Teile und Prozente beziehen sich, sofern nicht anders angegeben, auf das Gewicht.

Beispiel 1

Herstellung von Poly(6-N-carbazolylhexyl-methacrylat)

In einem ausgeheizten 500 ml-Dreihalskolben wurden 200 ml einer Lösung von 9-Borabicyclo[3.3.1.]nonan (9-BBN) in Tetrahydrofuran (0,5 mol/l) vorgelegt. Nach Zutropfen einer Lösung von 100 mmol N-5-Hexenylcarbazol in 100 ml trockenem Tetrahydrofuran wurde 3 Stunden bei Raumtemperatur gerührt und wurden anschließend nacheinander 60 ml Ethanol, 20 ml 6-normale Natronlauge und 40 ml Wasserstoffperoxid (30 %ig) zugegeben. Nach einstündigem Erhitzen am Rückfluß wurden zur Aufarbeitung dem Reaktionsgemisch 200 ml Wasser zugegeben und anschließend das Tetrahydrofuran abgezogen. Das entstandene N-(6-Hydroxyhexyl)carbazol wurde mit Ether extrahiert, der Ether getrocknet und verdampft. Anschließen wurde das erhaltene Roh-Produkt noch aus Hexan/Aceton (9:1) umkristallisiert. Das in 61 %iger Ausbeute erhaltene reine N-(6-Hydroxyhexyl)carbazol lag in Form weißer Kristalle vor.

Zu einer Lösung von 25 mmol N-(6-Hydroxyhexyl)carbazol und 30 mmol Triethylamin in 100 ml trockenem Dichlormethan wurde eine Lösung von 30 mmol Methacrylsäurechlorid in 10 ml Dichlormethan zugetropft. Anschließend wurde das Reaktionsgemisch 3 Stunden bei Raumtemperatur gerührt und danach zur Aufarbeitung mit 2-normaler Natronlauge und Wasser gewaschen. Das gebildete 6-(N-Carbazolyl)hexylmethacrylat wurde nach Einengen des Reaktionsgemisches durch Säulenchromatographie an Kieselgel (Eluent:Dichlormethan) isoliert. Das so in einer Ausbeute von 70 % erhaltene 6-(N-Carbazolyl)hexylmethacrylat lag als farbloses Öl vor und zeigte folgende Kenndaten:

| | |
|---|---|
| IR (Film): | 1715 $cm^{-1}$ (Ester), 1635 $cm^{-1}$ (C=C) |
| | 1625, 1595, 750, 720 $cm^{-1}$ (Carbazol) |
| $^1H$-NMR ($CDCl_3$): | $\delta$ = 1,3-1,9 (m), 4,02 (t), 4,23 (t), 5,46 (m), 6,00 (m), 7,1-7,2 (m), 7,3-7,5 (m), 8,0-8,1 (m) |
| | Intensitätsverhältnis: 11:2:2:1:1:2:4:2 |

17,6 mmol 6-(N-Carbazolyl)hexylmethacrylat und 0,18 mmol Azobisisobutyronitril wurden in 50 ml trockenem Toluol gelöst, die Lösung entgast und dann für 48 Stunden unter Rühren auf 60°C erhitzt. Nach Abkühlen wurde das erhaltene Polymer in Methanol ausgefällt und zur weiteren Reinigung zweimal aus Chloroform/Methanol umgefällt. Auf diese Weise wurde Poly(6-N-carbazolylhexyl-methacrylat) in einer Ausbeute von 88 % erhalten. Das Polymere wurde durch IR-Spektroskopie und GPC charakterisiert. Die Kenndaten sind nachfolgend wiedergegeben.

| | |
|---|---|
| IR (Film): | 1720 $cm^{-1}$ (Ester), 1625, 1595, 750, 720 $cm^{-1}$ (Carbazol) |
| GPC: | Das mittels GPC (Polystyrolstandards) bestimmte Molekulargewicht lag bei 66.000 ($\overline{M}_w$: 84.000, $\overline{M}_n$: 28.000, $\overline{M}_w/\overline{M}_n$ = 3,1) |

Beispiele 2 und 3

In analoger Weise wie in Beispiel 1 beschrieben, wurden folgende weiteren Polymeren hergestellt und durch die entsprechenden Analysenmethoden charakterisiert: Poly(3-N-carbazolylpropyl-methacrylat) und Poly(11-N-carbazolylundecyl-methacrylat). Alle so hergestellten Polymeren waren bei Raumtemperatur fest und nicht klebrig. Ihr Molekulargewicht (Gewichtsmittel) lag im Bereich von 50.000 bis 100.000.

Beispiele 4 bis 6

Herstellung von elektrophotographischen Aufzeichnungselementen

Aus den gemäß Beispiel 1 bis 3 hergestellten erfindungsgemäßen seitenständige Carbazolyl-Gruppen

enthaltenden Methacrylat-Polymerisaten wurden 14 %ige Lösungen in Tetrahydrofuran hergestellt. Diese Lösungen wurden nach einer Filtration auf selenbedampfte Trägerfolien gegossen und das Tetrahydrofuran abgedampft. Die Photoleiterschichten hatten nach dem Trocknen eine Dicke von 10 µm. Bei der selenbedampften Trägerfolie handelte es sich um eine ca. 100 µm dicke Polyethylenterephthalat-Folie, die mit einer dünnen Aluminiumschicht bedampft war. Die auf dem Aluminium aufgedampfte Selen-Schicht hatte eine Stärke von ca. 1 µm.

In allen Fällen resultierten elektrophotographische Aufzeichnungselemente, bei denen die Photoleiterschicht aus den erfindungsgemäßen seitenständige Carbazolyl-Gruppen enthaltenden Methacrylat-Polymerisaten fest auf der selenbedampften Trägerfolie hafteten und auch beim Biegen des Aufzeichnungselementes nicht brachen oder abblätterten. Die an diesen elektrophotographischen Aufzeichnungselementen gemessenen Photoleiteigenschaften sind in der nachfolgenden Tabelle wiedergegeben.

Zum Vergleich wurde ein elektrophotographisches Aufzeichnungselement hergestellt, bei dem auf der selenbedampften Trägerfolie eine Photoleiterschicht von 10 µm Dicke aus radikalisch polymerisiertem Poly(2-N-carbazolylethyl-methacrylat), wie es aus dem Stand der Technik bekannt ist, aufgebracht war. Beim Biegen dieses Aufzeichnungselementes brach die Photoleiterschicht und blätterte stellenweise vom Träger ab.

Tabelle

Messung der Photoleitfähigkeit

| Beispiel | Photoleiter | $E_{max}$ kV/m | Dunkelabfall % | Photoabfall % | Halbwertszeit ms |
|---|---|---|---|---|---|
| 4 | Poly(6-N-carbazolylhexyl-methacrylat) von Beispiel 1 | 229 | 8 | 50 | 149 |
| 5 | Poly(3-N-carbazolylpropyl-methacrylat) von Beispiel 2 | 52 | 18 | 49 | 188 |
| 6 | Poly(11-N-carbazolylundecyl-methacrylat) von Beispiel 3 | 185 | 22 | 56 | 130 |

## Patentansprüche

### Patentansprüche für folgende Vertragsstaaten : BE, CH, DE, FR, GB, IT, LI, NL, SE

1. Seitenständige Carbazolyl-Gruppen enthaltende Methacrylat-(Co)Polymerisate, dadurch gekennzeichnet, daß sie wiederkehrende Einheiten der allgemeinen Formel (I)

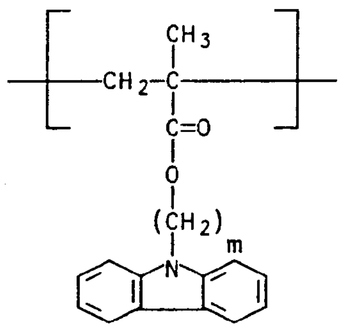

(I)

worin m für eine ganze Zahl von 3 bis 11 steht, eingebaut enthalten oder hieraus bestehen.

2. Die Methacrylat-(Co)Polymerisate nach Anspruch 1, dadurch gekennzeichnet, daß m eine ganze Zahl von 4 bis 11, insbesondere 4 bis 7, ist.

3. Die Methacrylatcopolymerisate nach einem der Ansprüche 1 bis 2, dadurch gekennzeichnet, daß sie Acrylsäure- und/oder Methacrylsäure-Einheiten eingebaut enthalten.

4. Feste photoleitfähige Schichten, hergestellt aus Methacrylat-(Co)Polymerisaten gemäß einem der Ansprüche 1 bis 3.

5. Zum Aufspannen auf Trommeln und Zylinder geeignetes elektrophotographisches Aufzeichnungselement mit einem flexiblen elektrisch leitfähigen Träger und einer hierauf aufgebrachten festen photoleitfähigen Schicht, dadurch gekennzeichnet, daß die photoleitfähige Schicht mindestens ein Methacrylat-(Co)Polymerisat gemäß einem der Ansprüche 1 bis 3 enthält.

6. Verwendung von festen photoleitfähigen Schichten, hergestellt aus seitenständigen Carbazolyl-Gruppen enthaltenden Methacrylat-(Co)Polymerisaten, welche wiederkehrende Einheiten der allgemeinen Formel (I),

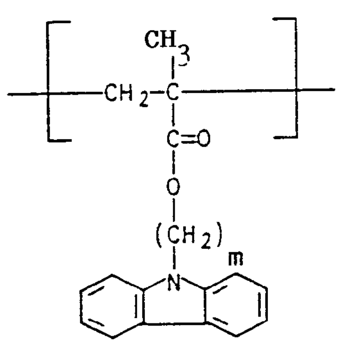

(I)

worin m für eine ganze Zahl von 3 bis 11 steht, eingebaut enthalten oder welche hieraus bestehen, für die Herstellung von elektrophotographischen Offset-Druckplatten und von Kopierfolien.

7. Wäßrig-alkalisch entwickelbare elektrophotographische Offset-Druckplatte mit einem flexiblen elektrisch

leitfähigen Träger und einer hierauf aufgebrachten festen photoleitfähigen Schicht, dadurch gekennzeichnet, daß sie als Photoleiter mindestens ein Methacrylat-(Co)Polymerisat aufweist, welches wiederkehrende Einheiten der allgemeinen Formel (I),

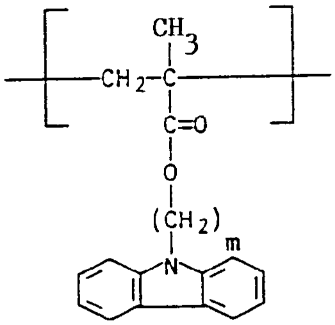

(I)

worin m für eine ganze Zahl von 3 bis 11 stehet, eingebaut enthalten oder welches hieraus besteht.

8. Elektrophotographische Offset-Druckplatte nach Anspruch 7, dadurch gekennzeichnet, daß die Methacrylat-(Co)Polymerisate weitere Comonomereinheiten eingebaut enthalten.

9. Elektrophotographische Offset-Druckplatte nach Anspruch 8, dadurch gekennzeichnet, daß die weiteren Comonomereinheiten Acrylsäure- und/oder Methacrylsäureeinheiten sind.

**Patentansprüche für folgenden Vertragsstaat : ES**

1. Verfahren zur Herstellung von Methacrylat-(Co)Polymerisaten, dadurch gekennzeichnet, daß man hierbei Methacrylate der allgemeinen Formel (IIIa),

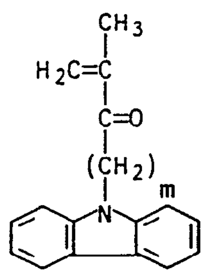

(IIIa)

worin m für eine ganze Zahl von 3 bis 11 steht, zu seitenständige Carbazolyl-Gruppen enthaltenden Methacrylat-(Co)Polymerisaten mit wiederkehrenden Einheiten der allgemeinen Formel (I)

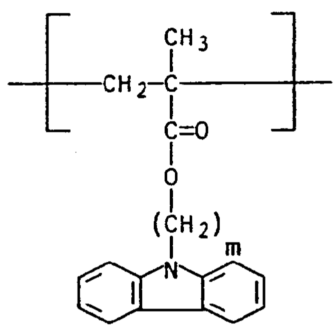

(I)

worin m die vorstehend genannte Bedeutung hat, (co)polymerisiert.

2. Das Verfahren zur Herstellung von Methacrylat-(Co)Polymerisaten nach Anspruch 1, dadurch gekennzeichnet, daß m eine ganze Zahl von 4 bis 11, insbesondere 4 bis 7, ist.

3. Das Verfahren zur Herstellung von Methacrylatcopolymerisaten nach einem der Ansprüche 1 bis 2, dadurch gekennzeichnet, daß man Acrylsäure- und/oder Methacrylsäure als Comonomere verwendet.

4. Verfahren zur Herstellung fester photoleitfähiger Schichten aus seitenständigen Carbazolylgruppen enthaltenden Polymerisaten nach an sich bekannten Methoden, dadurch gekennzeichnet, daß man hierbei die gemäß einem der Ansprüche 1 bis 3 hergestellten Methacrylat-(Co)Polymerisate verwendet.

5. Verwendung von festen photoleitfähigen Schichten, hergestellt aus seitenständigen Carbazolyl-Gruppen enthaltenden Methacrylat-(Co)Polymerisaten, welche wiederkehrende Einheiten der allgemeinen Formel (I),

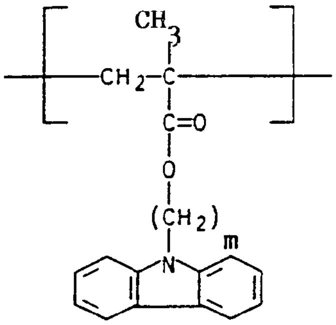

(I)

worin m für eine ganze Zahl von 3 bis 11 steht, eingebaut enthalten oder welche hieraus bestehen, für die Herstellung von elektrophotographischen Offset-Druckplatten und von Kopierfolien.

6. Elektrophotographisches Verfahren, dadurch gekennzeichnet, daß man hierbei ein zum Aufspannen auf Trommeln und Zylinder geeignetes elektrophotographisches Aufzeichnungselement mit einem flexiblen elektrisch leitfähigen Träger und einer hierauf aufgebrachten festen photoleitfähigen Schicht verwendet, wobei die photoleitfähige Schicht mindestens ein gemäß einem der Ansprüche 1 bis 4 hergestelltes Methacrylate-(Co)Polymerisat enthält oder hieraus besteht.

7. Verfahren zur Herstellung von Druckformen auf elektrophotographischem Wege, dadurch gekennzeichnet, daß man hierbei eine wäßrig-alkalisch entwickelbare elektrophotographische Offset-Druckplatte mit einem flexiblen elektrisch leitfähigen Träger und einer hierauf aufgebrachten festen photoleitfähigen Schicht verwendet, wobei die photoleitfähige Schicht als Photoleiter mindestens ein Methacrylat-(Co)Polymerisat aufweist, welches wiederkehrende Einheiten der allgemeinen Formel (I),

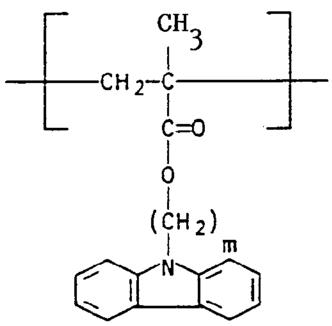

(I)

worin m für eine ganze Zahl von 3 bis 11 steht, eingebaut enthält oder welches hieraus besteht.

8. Das Verfahren nach Anspruch 7, dadurch gekennzeichnet, daß die Methacrylat-(Co)Polymerisate weitere Comonomereinheiten eingebaut enthalten.

9. Das Verfahren nach Anspruch 8, dadurch gekennzeichnet, daß die weiteren Comonomereinheiten Acrylsäure- und/oder Methacrylsäureeinheiten sind.

## Claims

**Claims for the following Contracting States : BE, CH, DE, FR, GB, IT, LI, NL, SE**

1. A methacrylate (co)polymer with pendant carbazolyl groups, comprising or consisting of repeating units of the formula (I)

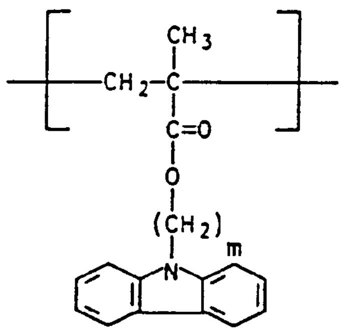

(I)

where m is an integer of from 3 to 11.

2. A methacrylate (co)polymer as claimed in claim 1, wherein m is an integer of from 4 to 11, in particular from 4 to 7.

3. A methacrylate copolymer as claimed in claim 1 or 2, comprising acrylic acid and/or methacrylic acid units.

4. A solid photoconductive layer, prepared from methacrylate (co)polymers as claimed in any of claims 1 to 3.

5. An electrophotographic recording element which is suitable for clamping on drums and cylinders and has a flexible electrically conductive substrate and a solid photoconductive layer applied atop, wherein the photoconductive layer contains at least one methacrylate (co)polymer as claimed in any of claims 1 to 3.

6. Use of solid photoconductive layers prepared from methacrylate (co)polymers with pendant carbazolyl groups, comprising or consisting of repeating units of the formula (I)

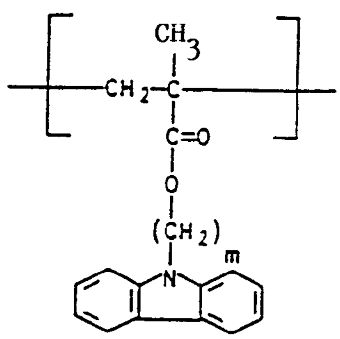

(I)

where m is an integer from 3 to 11, for the preparation of electrophotographic offset printing plates and of copying films.

7. An electrophotographic offset printing plate which can be developed in aqueous alkaline media and has a flexible electrically conductive substrate and a solid photoconductive layer applied atop, having, as the

photoconductor, at least one methacrylate (co)polymer comprising or consisting of repeating units of the formula (I)

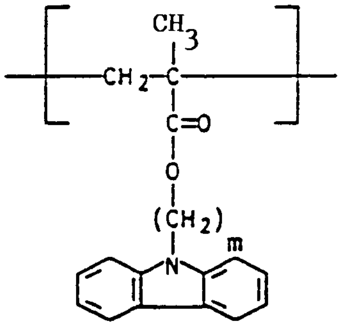

(I)

where m is an integer of from 3 to 11.

8. An electrophotographic offset printing plate as claimed in claim 7, wherein the methacrylate (co)polymer contains further polymerized comonomer units.

9. An electrophotographic offset printing plate as claimed in claim 8, wherein the further comonomer units are acrylic acid and/or methacrylic acid units.

**Claims for the following Contracting State : ES**

1. A process for preparing methacrylate (co)polymers, which comprises (co)polymerizing methacrylates of the formula (IIIa)

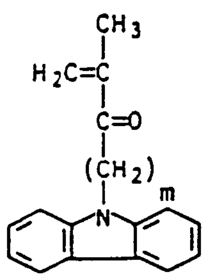

(IIIa)

where m is an integer from 3 to 11, to form methacrylate (co)polymers with pendant carbazolyl groups, comprising repeating units of the formula (I)

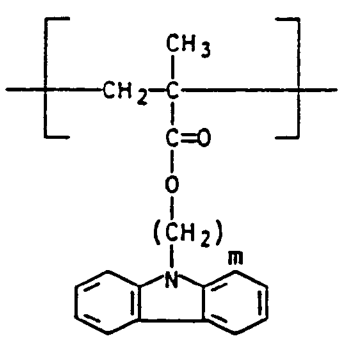

(I)

where m is as defined above.

2. The process for preparing methacrylate (co)polymers as claimed in claim 1, wherein m is an integer from

4 to 11, in particular from 4 to 7.

**3.** The process for preparing methacrylate copolymers as claimed in either of claims 1 and 2, wherein acrylic acid and/or methacrylic acid are used as comonomers.

**4.** A process for preparing solid photoconductive layers of polymers with pendant carbazolyl groups in a conventional manner, which comprises using the methacrylate (co)polymers prepared as claimed in any one of claims 1 to 3.

**5.** Use of solid photoconductive layers prepared from methacrylate (co)polymers with pendant carbazolyl groups comprising or consisting of units of the formula (I)

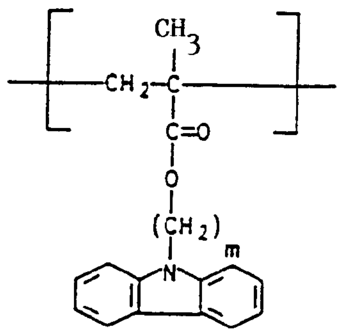

(I)

where m is an integer from 3 to 11, for the preparation of electrophotographic offset printing plates and of copying films.

**6.** An electrophotographic process, which comprises using an electrophotographic recording element which is suitable for clamping on drums and cylinders and has a flexible electrically conductive substrate and a solid photoconductive layer applied atop, wherein the photoconductive layer comprises or consists of at least one methacrylate (co)polymer prepared as claimed in any of claims 1 to 4.

**7.** A process for preparing printing plates by electrophotographic means, which comprises using an electrophotographic offset printing plate which can be developed in aqueous alkaline media and has a flexible electrically conductive substrate and a solid photoconductive layer applied atop, wherein the photoconductive layer has as photoconductor at least one methacrylate (co)polymer comprising or consisting of repeating units of the formula (I)

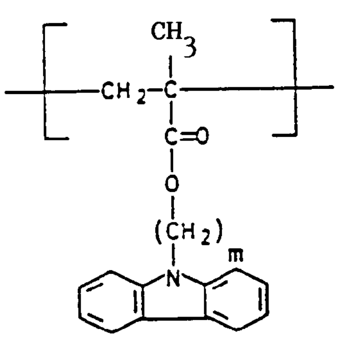

(I)

where m is an integer from 3 to 11.

**8.** The process as claimed in claim 7, wherein the methacrylate (co)polymer contains further polymerized comonomer units.

**9.** The process as claimed in claim 8, wherein the further comonomer units are acrylic acid and/or methacrylic acid units.

## Revendications

### Revendications pour les Etats contractants suivants : BE, CH, DE, FR, GB, IT, LI, NL, SE

1. (Co)polymères de méthacrylate, contenant des radicaux carbazolyle latéraux, caractérisés en ce qu'ils sont constitués par, ou contiennent à l'état incorporé, des unités récurrentes de la formule générale (I)

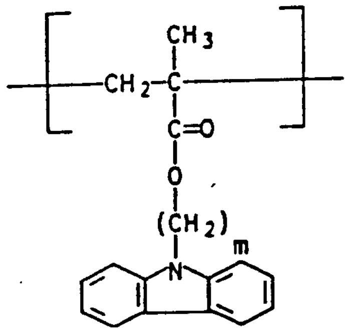

(I)

dans laquelle m représente un nombre entier de 3 à 11.

2. (Co)polymères de méthacrylate selon la revendication 1, caractérisés en ce que m représente un nombre entier de 4 à 11, plus particulièrement de 4 à 7.

3. (Co)polymères de méthacrylate selon l'une quelconque des revendications 1 et 2, caractérisés en ce qu'ils contiennent des unités acide acrylique et/ou acide méthacrylique à l'état incorporé.

4. Couches photoconductrices solides, obtenues à partir de (co)polymères de méthacrylate selon l'une quelconque des revendications 1 à 3.

5. Elément d'enregistrement électrophotographique convenant à être monté , serré ou fixé sur des tambours et cylindres, avec un support conducteur de l'électricité souple ou flexible et une couche photoconductrice solide appliquée sur ce support, caractérisé en ce que la couche photoconductrice contient au moins un (co)polymère de méthacrylate selon l'une quelconque des revendications 1 à 3.

6. Utilisation de couches photoconductrices solides, obtenues à partir de (co)polymères de méthacrylate contenant des radicaux carbazolyle latéraux, qui sont constitués par, ou contiennent à l'état incorporé, des unités récurrentes de la formule générale (I)

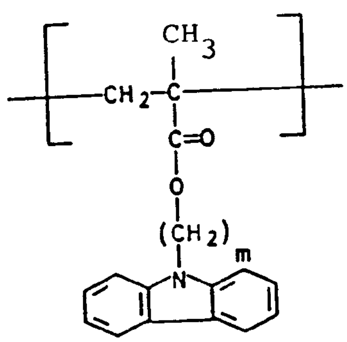

(I)

dans laquelle m représente un nombre entier de 3 à 11, en vue de la fabrication de plaques ou clichés d'impression offset électrophotographiques et de feuilles de copiage.

7. Plaques ou clichés pour l'impression offset électrophotographiques, pouvant être développés en milieu aqueux-alcalin, avec un support conducteur de l'électricité souple ou flexible et une couche photoconductrice solide appliquée sur ce support, qui se caractérisent par le fait de présenter, à titre de photoconducteur, au moins un (co)polymère de méthacrylate qui est constitué par, ou contient à l'état incorporé, des unités récurrentes de la formule générale (I)

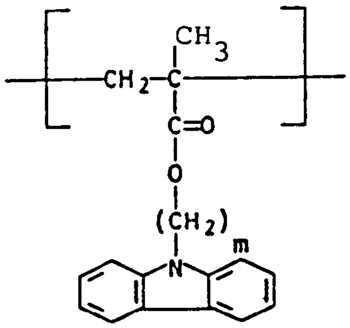

(I)

dans laquelle m représente un nombre entier de 3 à 11.

8. Plaques ou clichés d'impression offset électrophotographiques selon la revendication 7, caractérisés en ce que les (co)polymères de méthacrylate contiennent d'autres unités comonomériques à l'état incorporé.

9. Plaques ou clichés pour l'impression offset électrophotographiques, caractérisés en ce que les autres unités comonomériques sont des unités d'acide acrylique et/ou d'acide méthacrylique.

**Revendications pour l'Etat contractant suivant : ES**

1. Procédé de préparation de (co)polymères de méthacrylate, caractérisé en ce que l'on (co)polymérise des méthacrylates de la formule générale (IIIa)

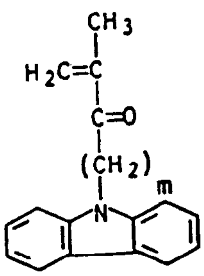

(IIIa)

dans laquelle m représente un nombre entier de 3 à 11, de manière à obtenir des (co)polymères de méthacrylate contenant des radicaux carbazolyle latéraux avec des unités récurrentes de la formule générale (I)

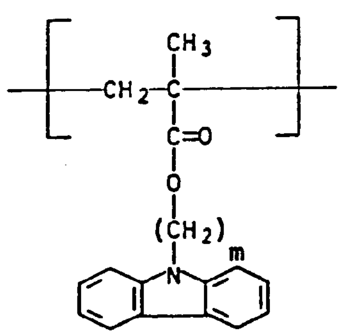

(I)

dans laquelle m possède les significations qui lui ont été attribuées ci-dessus.

2. Procédé de préparation de (co)polymères de méthacrylate suivant la revendication 1, caractérisé en ce que m représente un nombre entier de 4 à 11, plus particulièrement de 4 à 7.

3. Procédé de préparation de copolymères de méthacrylate selon l'une quelconque des revendications 1 et 2, caractérisé en ce que l'on utilise de l'acide acrylique et/ou de l'acide méthacrylique à titre de comonomères.

4. Procédé de réalisation de couches photoconductrices solides à partir de polymères contenant des radicaux carbazolyle latéraux, selon des méthodes en soi connues, caractérisé en ce que l'on utilise les (co)polymères de méthacrylate préparés selon l'une quelconque des revendications 1 à 3.

5. Utilisation de couches photoconductrices solides, obtenues à partir de (co)polymères de méthacrylate contenant des radicaux carbazolyle latéraux, qui sont constitués par, ou contiennent à l'état incorporé, des unités récurrentes de la formule générale (I)

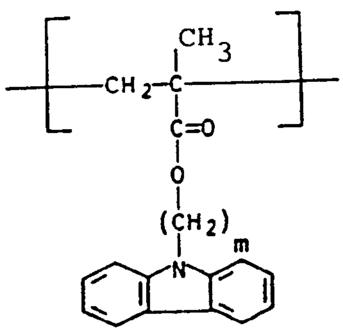

(I)

dans laquelle m représente un nombre entier de 3 à 11, en vue de la fabrication de plaques ou clichés d'impression offset électrophotographiques et de feuilles de copiage.

6. Procédé électrophotographique, caractérisé en ce que l'on utilise un élément d'enregistrement électrophotographique convenant à être monté, serré ou fixé sur des tambours et cylindres avec un support conducteur de l'électricité souple ou flexible et une couche photoconductrice solide, appliquée sur ce support, où la couche photoconductrice est constituée par ou contient au moins un (co)polymère de méthacrylate préparé selon l'une quelconque des revendications 1 à 4.

7. Procédé de fabrication de formes ou clichés d'impression par voie électrophotographique, caractérisé en ce que l'on utilise une plaque ou cliché d'impression offset électrophotographique que l'on peut développer par voie aqueuse-alcaline avec un support conducteur de l'électricité souple ou flexible et une couche photoconductrice solide appliquée sur ce support, où la couche photoconductrice présente, à titre de photoconducteur, au moins un (co)polymère de méthacrylate qui est constitué par, ou contient à l'état incrporé, des unités récurrentes de la formule générale (I)

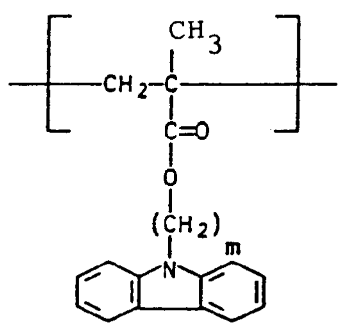

(I)

dans laquelle m représente un nombre entier de 3 à 11.

8. Procédé suivant la revendication 7, caractérisé en ce que les (co)polymères de méthacrylate contiennent d'autres unités comonomériques à l'état incorporé.

9. Procédé suivant la revendication 8, caractérisé en ce que les autres unités comonomériques sont des unités d'acide acrylique et/ou d'acide méthacrylique.